Europäisches Patentamt

European Patent Office

Office européen des brevets

(19)

(11) **EP 0 436 925 B1**

(12) **EUROPÄISCHE PATENTSCHRIFT**

(45) Veröffentlichungstag und Bekanntmachung des Hinweises auf die Patenterteilung:
**14.08.1996 Patentblatt 1996/33**

(51) Int Cl.[6]: **G02F 1/29**, G02F 1/01

(21) Anmeldenummer: **90125404.5**

(22) Anmeldetag: **24.12.1990**

(54) **Optischer Modulator**

Optical modulator

Modulateur optique

(84) Benannte Vertragsstaaten:
**AT BE CH DE ES FR GB IT LI NL SE**

(30) Priorität: **11.01.1990 DE 4000616**

(43) Veröffentlichungstag der Anmeldung:
**17.07.1991 Patentblatt 1991/29**

(73) Patentinhaber:
• **Alcatel SEL Aktiengesellschaft**
**D-70435 Stuttgart (DE)**
Benannte Vertragsstaaten:
**DE**
• **ALCATEL N.V.**
**NL-1077 XX Amsterdam (NL)**
Benannte Vertragsstaaten:
**BE CH ES FR GB IT LI NL SE AT**

(72) Erfinder:
• **Kersten, Peter, Dr.**
**W-7250 Leonberg (DE)**
• **Wieder, Andreas**
**W-7000 Stuttgart 1 (DE)**
• **Hanisch, Helmut**
**W-7440 Nürtingen (DE)**

(74) Vertreter: **Pohl, Herbert, Dipl.-Ing et al**
**Alcatel Alsthom**
**Intellectual Property Department,**
**Postfach 30 09 29**
**70449 Stuttgart (DE)**

(56) Entgegenhaltungen:
**EP-A- 0 021 967**

• **JOURNAL OF APPLIED PHYSICS. Bd. 64, Nr. 5, September 1988, NEW YORK US Seiten 2749 - 2751; J.R. HILL ET AL.: 'Demonstration of the linear electro-optic effect in a thermopoled polymer film'**
• **SPIE,VOL 971 PROCEEDINGS "NONLINEAR OPTICAL PROPERTIES OF ORGANIC MATERIALS" 1988 Seiten 218 - 229; R. LYTEL ET AL.: 'Organic electro-optic waveguide modulators and switches'**

**Beschreibung**

Die Erfindung betrifft einen optischen Modulator gemäß dem Oberbegriff des Patentanspruchs 1.

Eine derartige Anordnung ist aus der Literaturstelle "Organic polymer films for nonlinear optics", Br. Telecom Technol. J. 6, 1988 bekannt. Aus den Figuren 11 und 12 dieser Druckschrift geht ein optischer Modulator hervor, bei dem auf einem Glas-Substrat ein mit interdigitalen Elektroden versehenes Polymer angeordnet ist. Die beiden Elektroden greifen kammartig ineinander und sind jeweils mit einem Signalanschluß verbunden. Bei der Fertigung dieses elektrooptischen Modulators wird das Polymer erhitzt und gleichzeitig eine Gleichspannung an die Signalanschlüsse gelegt. Die Gleichspannung bleibt angelegt, bis eine Abkühlung auf Raumtemperatur erfolgt ist. Als Resultat stellt sich eine Polarisation des Polymers ein. Wird nun im Modulationsbetrieb Licht, insbesondere Laserlicht, durch das durch die Elektroden und die dazwischenliegenden Spalte gebildete optische Gitter geleitet, so bilden sich Beugungslinien aus, die z.B. auf einem hinter dem optischen Modulator angeordneten Schirm sichtbar gemacht werden können. Wird an die Signalanschlüsse ein Signal (Wechselspannungssignal) angelegt, so stellt sich eine Brechzahländerung des beschriebenen Gitters ein, die sich auf die Lage der Beugungslinien auswirkt. Diese verändern ihre Lage somit entsprechend dem Informationsinhalt des Signals. Mittels eines die Beugungslinien abtastenden Detektors läßt sich die Lichtmodulation wieder in ein elektrisches Signal umwandeln. Da bei der bekannten Anordnung die Brechzahländerung für alle Einzelspalte des Gitters dieselbe ist, hat die bekannte Anordnung einen relativ schlechten Wirkungsgrad. Eine Lichtmodulation kann deshalb nur im Nahfeld beobachtet werden.

Der Erfindung liegt die Aufgabe zugrunde, einen optischen Modulator der eingangs genannten Art zu schaffen, der einen höheren Wirkungsgrad als die bekannte Anordnung aufweist.

Diese Aufgabe wird durch die Merkmale des Patentanspruchs 1 gelöst.

Durch die Elektrodenanordnung des optischen Modulators nach der Erfindung wird es möglich, die Brechungsindizes des lichtdurchlässigen Materials in den Spalten einer Doppelspaltanordnung gegensinnig zueinander zu verändern. Damit wird ein hoher Wirkungsgrad des optischen Modulators erzielt und die Modulation läßt sich auch im Fernfeld beobachten.

Die Gegensinnigkeit der Brechungsindexänderung in den beiden Spalten kann gemäß Patentanspruch 2 dadurch erreicht werden, daß bei der Polarisation des lichtdurchlässigen Materials in beiden Spalten entgegengesetzt gerichtete Vorzugs-Polarisationen geschaffen werden, auf die ein in beiden Spalten gleiches Modulationsspannungssignal in einem Spalt polarisationsverstärkend, im anderen polarisationsabschwächend wirkt.

Werden gemäß Patentanspruch 3 in beiden Spalten gleichgerichtete Vorzugs-Polarisationen erzeugt, so kann die Gegensinnigkeit der Brechungsindexänderung dadurch erreicht werden, daß das Modulationssignal an die Mittelelektrode gelegt wird und die beiden äußeren Elektroden gemeinsam den Gegenpol bilden.

Nach einer Weiterbildung der Erfindung gemäß Patentanspruch 4 ist vorgesehen, daß als lichtdurchlässiges Material im Bereich der Spalte ein optisch nichtlineares Polymer (NLO-Polymer) verwendet wird.

Nach einer anderen Weiterbildung der Erfindung (Patentanspruch 5) ist für eine einfache Ausbildung vorgesehen, daß die Spaltanordnung von den Elektroden selbst gebildet ist.

Nach Patentanspruch 6 ist das lichtdurchlässige Material auf einem Substrat angeordnet und auch die Elektroden können auf dem Substrat im Bereich der Grenzfläche von Substrat und lichtdurchlässigem Material angeordnet sein.

Alternativ ist es (Patentanspruch 7) jedoch auch möglich, daß zwischen den Elektroden und dem lichtdurchlässigen Material eine Bufferschicht angeordnet ist. Diese Bufferschicht verhindert, daß hohe Feldstärken, die an den Elektrodenrändern auftreten, das lichtdurchlässige Material im Bereich der Spalte unmittelbar beeinflussen und störend wirken.

Vorzugweise kann die Bufferschicht aus Polymethylmethacrylat (PMMA) bestehen (Patentanspruch 8).

Gemäß Patentanspruch 9 können, wenn z.B. eine größere Bestrahlungsfläche für das Laserlicht geschaffen werden soll, mehrere Doppelspaltanordnungen mit parallel zueinander benachbarten Spalten nebeneinanderliegend angeordnet werden. Dies führt zur Bildung eines Gitters.

Möglich ist ferner die Bildung einer Kaskade, z.B. zur Herstellung logischer Verknüpfungen. Hierbei werden mehrere (z.B. zwei) Doppelspaltanordnungen hintereinanderliegend angeordnet. Das von dem der Lichtquelle zugewandten optischen Modulator beeinflußte Licht fällt auf einen weiteren optischen Modulator und wird dort - entsprechend der Signalansteuerung - weiterverarbeitet.

Patentanspruch 10, schließlich, betrifft die Bildung von Modulator-Arrays.

Die Zeichnungen veranschaulichen die Erfindung anhand mehrerer Ausführungsbeispiele und zwar zeigt:

Fig. 1      eine Elektrodenanordnung eines optischen Modulators in Draufsicht,

Fig. 2      einen Querschnitt durch einen Modulator mit einer Elektrodenanordnung gemäß Fig. 1.,

Fig. 3      ein Ausführungsbeispiel eines optischen Modulators mit einer Bufferschicht, im Querschnitt,

Fig. 4      eine schematische Darstellung eines optischen Modulators, dessen moduliertes Licht von einem Fotodetektor erfaßt wird,

Fig. 5      den Verlauf einer relativen Intensitätsänderung bei einer Modulationsspannung von ± 100 V,

Fig. 6      eine aus zwei hintereinanderliegenden Doppelspaltanordnungen gebildetete Kaskade und

Fig. 7      ein Modulator-Array.

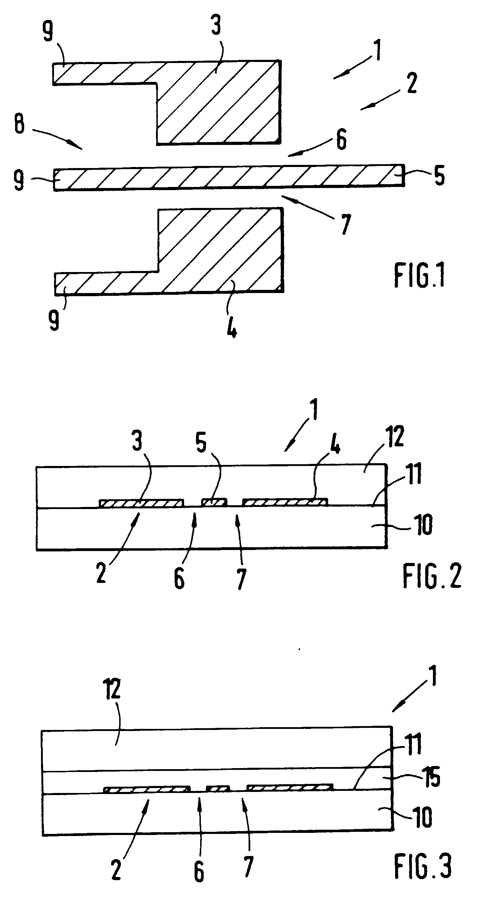

Gemäß den Fig. 1 und 2 besteht der erfindungsgemäße optische Modulator 1 aus einer Elektrodenanordnung 2, die drei Elektroden aufweist. Zwischen zwei äußeren Elektroden 3 und 4 ist eine Mittelelektrode 5 angeordnet.

Zwischen der äußeren Elektrode 3 und der Mittelelektrode 5 ist ein erster Spalt 6 und zwischen der äußeren Elektrode 4 und der Mittelelektrode 5 ein zweiter Spalt 7 ausgebildet. Die Spalte 6 und 7 bilden eine Doppelspaltanordnung 8. Die Elektroden 3 und 4 und die Mittelelektrode 5 sind jeweils mit einem Signalanschluß 9 zum Anlegen eines Polarisationspotentials oder eines Modulationssignals versehen.

Die Mittelelektrode 5 hat eine Breite von 100 µm. Dieses Maß entspricht dem Spaltabstand zwischen dem ersten Spalt 6 und dem zweiten Spalt 7. Die Spaltbreite beträgt jeweils 20 µm. Die Elektrodenanordnung 2 besteht aus Cr-Au. Sie ist auf der Oberfläche 11 eines Substrats 10 angeordnet und von einen elektrooptischen Effekt aufweisendem lichtdurchlässigem Material 12 abgedeckt. Das lichtdurchlässige Material kann ein optisch nichtlineares Polymer (NLO-Polymer) sein, das, vorzugsweise durch Spin-Coating, als Schicht auf dem Substrat 10 aufgebracht ist. Die Schichtdicke beträgt einige Mikrometer (z.B. 3,7 µm).

Bei der Herstellung des erfindungsgemäßen Modulators 1 wird das lichtdurchlässige Material erhitzt, wobei gleichzeitig hohes Gleichspannungspotential (z.B. 600 V) an die Mittelelektrode, niedriges Potential (z.B. Massepotential) an die beiden äußeren Elektroden angelegt wird.

Hierdurch verlaufen die Polarisationsfelder in den Einzelspalten 6 und 7 einander entgegengerichtet. Nach Abkühlung des lichtdurchlässigen Materials auf Raumtemperatur bleibt die durch die Gleichspannung erzeugte Polarisation teilweise erhalten.

Bei Modulationsbetrieb wird die Doppelspaltanordnung 8 mit Licht, insbesondere Laserlicht, bestrahlt, wobei die Lage der Polarisationsebene des einfallenden Lichtes von Bedeutung ist. Liegt die Polarisation P des einfallenden Lichtes in der Darstellungsebene so ist der elektrooptische Koeffizient $r_{33}$ wirksam. Bei einer Polarisation des einfallenden Lichtes senkrecht zur Darstellungsebene ist der elektrooptische Koeffizient $r_{13}$ maßgebend. Werden NLO-Polymere als lichtdurchlässiges Material 12 eingesetzt, so gilt nach bisherigen Untersuchungen

$$r_{33} >> r_{13}$$

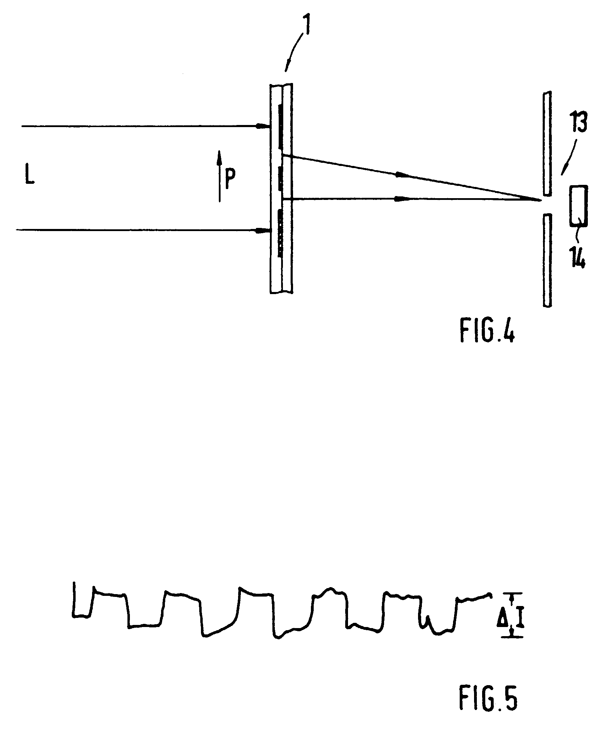

In Fig. 4 ist der oben beschriebene Sachverhalt schematisch wiedergegeben, wobei die Polarisation P des einfallenden Lichts L in der Darstellungsebene liegt. Hinter dem optischen Modulator 1 ist ein einfacher Spalt 13 angeordnet, hinter dem sich ein Fotodetektor 14 befindet.

Im Betrieb wird die wie vorstehend beschrieben polarisierte Anordung derart mit einem Modulationssignal beaufschlagt, daß die äußeren Elektroden 3 und 4 gegenüber der z.B. auf Masse gelegten Mittelelektrode 5 an entgegengesetzt gleich großen Spannungen liegen. Damit ist in dem einen Spalt (z.B. erster Spalt 6) das elektrische Feld des Signals mit dem zuvor aufgebrachten Polarisationsfeld gleichgerichtet, während im anderen Spalt (z.B. zweiter Spalt 7) das Feld des Signals dem zuvor angelegten Polarisationsfeld entgegengerichtet ist. Hieraus resultiert eine entgegengesetzt gleich große Brechungsindexänderung des lichtdurchlässigen Materials in den beiden Spalten 6 und 7. Nach Anlegen des Signals an die Elektroden 3 bis 5 der Doppelspaltanordnung 8 verschiebt sich dadurch das Beugungsbild, so daß der hinter dem Einfachspalt 13 angeordnete Fotodetektor 14, der nicht Teil des Modulators 1 ist, sondern hier nur dem Nachweis der Modulation dient, eine Intensitätsschwankung erfassen kann.

Mit der erfindungsgemäßen Anordnung lassen sich verhältnismäßig große Intensitätsschwankungen erreichen, was auf den großen Modulationsgrad der Anordnung zurückzuführen ist.

Alternativ zur bereits beschriebenen Polarisation bzw. Signalbeaufschlagung kann auch so vorgegangen werden, daß in den beiden Einzelspalten (erster Spalt 6 und zweiter Spalt 7) gleichsinnig verlaufende Polarisationsfelder erzeugt werden. Hierzu wird die Polarisationsgleichspannung in entsprechender Weise an die Elektroden 3 bis 5 gelegt. Zum Ansteuern mit dem Modulationssignal wird dann z.B. die Mittelelektrode mit Masse verbunden, während die beiden äußeren Elektroden 3 und 4 mit demselben Signalpotential beaufschlagt werden.

Im Ausführungsbeispiel der Fig. 3 ist der Modulator 1 - im Gegensatz zum Ausführungsbeispiel der Fig. 2 - mit einer Bufferschicht 15 versehen. Die auf der Oberfläche 11 des Substrats 10 aufliegende Elektrodenanordnung 2 ist in die Bufferschicht 15 eingebettet. Letztere besteht aus Polymethylmethacrylat (PMMA). Ihre Schichtdicke beträgt vorzugsweise 1,5 µm. Auf die Bufferschicht 15 ist dann das lichtdurchlässige Material 12, z.B. NLO-Polymer, aufgebracht. Durch die Bufferschicht 15 werden extrem hohe Feldstärken, die an den Elektrodenrändern auftreten können, vom polarisierten lichtdurchlässigen Material ferngehalten, so daß diese extremen Feldstärken nicht störend in Erscheinung treten.

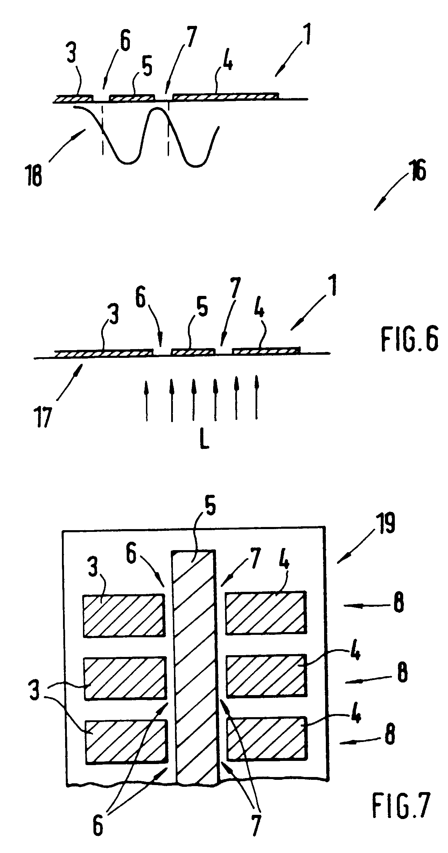

Fig. 5 zeigt die relative Lichtintensitätsänderung $\Delta$I gemäß dem Ausführungsbeispiel der Fig. 3. Diese beträgt:

$$\frac{\Delta I}{I} = 2,4 \cdot 10^{-3},$$

wobei die Einzelspaltbreite 20 µm, die Schichtdicke des lichtdurchlässigen Materials 12 3,7 µm (NLO-Polymer), die Schichtdicke der aus PMMA bestehenden Bufferschicht 15 1,5 µm, der Spaltabstand 100 µm, die Modulationsspannung +/- 100 Volt und $r_{33} = 8,3$ pm/V beträgt.

Aus Fig. 6 geht eine Kaskade 16 hervor, die von zwei hintereinander liegenden Modulatoren 1 gebildet wird. Mit ihr lassen sich z.B. logische Verknüpfungen realisieren. Die Anordnung ist derart ausgebildet, daß die dem einfallenden Licht zugewandte, erste Doppelspaltanordnung 17 gegenüber der dahinterliegenden, zweiten Doppelspaltanordnung 18 so weit versetzt liegt, daß die Spalte der zweiten Doppelspaltanordnung mit den Flanken der Intensitätsmaxima der durch die erste Doppelspaltanordnung 17 gebildeten Fraunhoferschen Linien zusammenfallen.

Der Modulator 1 kann auch gemäß Fig. 7, als Modulator-Array 19 ausgebildet sein, wobei mehrere Doppelspaltanordnungen 8 mit gemeinsamer Mittelelektrode 5 übereinanderliegend angeordnet sind. Aus solchen Modulator-Arrays 19 lassen sich ebenfalls Kaskaden 16 bilden.

## Patentansprüche

1. Optischer Modulator mit zwischen Elektroden (3, 4, 5) angeordneten, Licht durchlassenden Spalten (6, 7) und im Bereich der Spalte befindlichem, einen elektrooptischen Effekt zeigendem und eine Polarisations-Vorzugsrichtung aufweisendem, lichtdurchlässigem Material (12),
   **dadurch gekennzeichnet**, daß jeweils zwei Spalte (6, 7) eine Doppelspaltanordnung (8) bilden, bei der die Spalte zwischen drei elektrisch voneinander unabhängig ansteuerbaren Elektroden (3, 4, 5) angeordnet sind, von denen eine als Mittelelektrode (5) zwischen beiden Spalten (6, 7) liegt.

2. Optischer Modulator nach Patentanspruch 1, dadurch gekennzeichnet, daß das lichtdurchlässige Material (12) im Bereich der Spalte (6, 7) einer Doppelspaltanordnung (8) in beiden Spalten einander entgegengesetzte Polarisations-Vorzugsrichtungen besitzt.

3. Optischer Modulator nach Patentanspruch 1, dadurch gekennzeichnet, daß das lichtdurchlässige Material im Bereich der Spalte einer Doppelspaltanordnung in beiden Spalten dieselbe Polarisations-Vorzugsrichtung besitzt.

4. Optischer Modulator nach einem der vorstehenden Patentansprüche, dadurch gekennzeichnet, daß das im Bereich der Spalte befindliche lichtdurchlässige Material ein optisch nicht lineares Polymer (NLO-Polymer) ist.

5. Optischer Modulator nach einem der vorstehenden Patentansprüche, dadurch gekennzeichnet, daß die Spalte (6, 7) der Doppelspaltanordnungen (8) von den Elektroden (3, 4, 5) begrenzt werden.

6. Optischer Modulator nach einem der vorstehenden Patentansprüche, dadurch gekennzeichnet, daß sich das lichtdurchlässige Material im Bereich der Spalte auf einem Substrat (10) befindet und daß die Elektroden auf dem Substrat, im Bereich der Grenzfläche zwischen lichtdurchlässigem Material (12) und Substrat (10) angeordnet sind.

7. Optischer Modulator nach Patentanspruch 6, dadurch gekennzeichnet, daß zwischen dem lichtdurchlässigen Material im Bereich der Spalte und den auf dem Substrat angeordneten Elektroden eine lichtdurchlässige Bufferschicht (15) angeordnet ist.

8. Optischer Modulator nach Patentanspruch 7, dadurch gekennzeichnet, daß die Bufferschicht (15) aus Polymethylmethacrylat (PMMA) besteht.

9. Optischer Modulator nach einem der vorstehenden Patentansprüche, dadurch gekennzeichnet, daß jeweils mehrere Doppelspaltanordnungen (17, 18) mit parallel zueinander verlaufenden Spalten nebeneinander oder hintereinander angeordnet sind.

10. Optischer Modulator nach einem der vorstehenden Patentansprüche, dadurch gekennzeichnet, daß jeweils mehrere Doppelspaltanordnungen in Form eines Arrays (19), übereinander angeordnet sind.

## Claims

1. An optical modulator with gaps (6, 7) which are arranged between electrodes (3, 4, 5) and which transmit light and with light-permeable material (12) which is located in the region of the gaps, exhibits an electro-optical effect and possesses a preferred polarisation direction, characterised in that in each case two gaps (6, 7) form a double gap arrangement (8) in which the gaps are arranged between three electrodes (3, 4, 5) which can be electrically actuated independently of one another and of which one is located as central electrode (5) between the two gaps (6, 7).

2. An optical modulator as claimed in Claim 1, characterised in that the light-permeable material (12) in the region of the gaps (6, 7) of a double gap arrangement (8) possesses mutually opposing preferred polarisation directions in the two gaps.

3. An optical modulator as claimed in Claim 1, characterised in that the light-permeable material in the region of the gaps of a double gap arrangement possesses the same preferred polarisation direction in the two gaps.

4. An optical modulator as claimed in one of the preceding claims, characterised in that the light-permeable material located in the region of the gaps is an optically non-linear polymer (NLO-polymer).

5. An optical modulator as claimed in one of the preceding claims, characterised in that the gaps (6, 7) of the double gap arrangements (8) are delimited by the electrodes (3, 4, 5).

6. An optical modulator as claimed in one of the preceding claims, characterised in that the light-permeable material in the region of the gaps is arranged on a substrate (10) and that the electrodes are arranged on the substrate in the region of the boundary surface between light-permeable material (12) and substrate (10).

7. An optical modulator as claimed in Claim 6, characterised in that a light-permeable buffer layer (15) is arranged between the light-permeable material in the region of the gaps and the electrodes arranged on the substrate.

8. An optical modulator as claimed in Claim 7, characterised in that the buffer layer (15) consists of polymethyl methacrylate (PMMA).

9. An optical modulator as claimed in one of the preceding claims, characterised in that a plurality of double gap arrangements (17, 18) with gaps extending in parallel to one another are in each case arranged one beside another or in series with one another.

10. An optical modulator as claimed in one of the preceding claims, characterised in that a plurality of double gap arrangements are in each case arranged one above another in the form of an array (19).

**Revendications**

1. Modulateur optique comportant des fentes (6, 7) laissant passer la lumière, disposées entre des électrodes (3, 4, 5), et un matériau transparent (12) se trouvant dans la zone des fentes, ayant un effet électro-optique et présentant une orientation préférentielle de polarisation, caractérisé en ce que les deux fentes (6, 7) forment chaque fois un dispositif à deux tentes (8), sur lequel les fentes sont disposées entre trois électrodes électriques (3, 4, 5) commandées indépendamment les unes des autres, dont une est placée en tant qu'électrode centrale (5) entre deux électrodes extérieures (6, 7).

2. Modulateur optique selon la revendication 1, caractérisé en ce que le matériau transparent (12) possède dans la zone des fentes (6, 7) d'un dispositif à deux fentes (8) des orientations préférentielles de polarisation en sens opposé l'une à l'autre dans les deux fentes.

3. Modulateur optique selon la revendication 1, caractérisé en ce que le matériau transparent possède dans la zone des fentes d'un dispositif à deux fentes les mêmes orientations préférentielles de polarisation dans les deux fentes.

4. Modulateur optique selon une des revendications précédentes, caractérisé en ce que le matériau transparent se trouvant dans la zone des fentes est un polymère optique non linéaire (polymère NLO).

5. Modulateur optique selon l'une des revendications précédentes, caractérisé en ce que les fentes (6, 7) des dispositifs à deux fentes (8) sont délimitées par les électrodes (3, 4, 5).

6. Modulateur optique selon l'une des revendications précédentes, caractérisé en ce que le matériau transparent se trouve dans la zone des fentes sur un substrat (10) et en ce que les électrodes sont disposées sur le substrat dans la zone de la surface de séparation entre le matériau transparent (12) et le substrat (10).

7. Modulateur optique selon la revendication 6, caractérisé en ce qu'une couche tampon transparente (15) est disposée entre le matériau transparent dans la zone des fentes et les électrodes disposées sur le substrat.

8. Modulateur optique selon la revendication 7, caractérisé en ce que la couche tampon (15) est en polyméthacrylate de méthyle (PMMA).

9. Modulateur optique selon l'une des revendications précédentes, caractérisé en ce que plusieurs dispositifs à deux fentes (17, 18) présentant des fentes s'étendant parallèlement l'une à l'autre sont à chaque fois disposés l'un à côté ou l'un derrière l'autre.

10. Modulateur optique selon une des revendications précédentes, caractérisé en ce que plusieurs dispositifs à deux fentes sont à chaque fois disposés l'un au-dessus de l'autre pour former un réseau (19).

FIG.1

FIG.2

FIG.3

FIG.4

FIG.5

FIG.6

FIG.7